# EUROPÄISCHE PATENTSCHRIFT

(11) **EP 2 014 528 B1**
(45) Veröffentlichungstag und Bekanntmachung des Hinweises auf die Patenterteilung: **21.09.2011**
(21) Anmeldenummer: 08009127.5
(22) Anmeldetag: 16.05.2008
(51) Int. Cl.: B60T 8/18

(54) **Landwirtschaftliches Anhängefahrzeug**
Agricultural trailer vehicle
Remorque agricole

(30) Priorität: 13.06.2007 DE 102007027193
(43) Veröffentlichungstag der Anmeldung: 14.01.2009
(73) Patentinhaber: Amazonen-Werke H. Dreyer GmbH & Co. KG, 49205 Hasbergen-Gaste (DE)
(72) Erfinder: Klaus, Daniel, 32657 Lemgo (DE); Ehlen, Volker, 49205 Hasbergen (DE)

(56) Entgegenhaltungen:
- EP-A- 0 913 077
- DE-A1- 10 029 282
- DE-A1- 10 215 033

## Beschreibung

Die Erfindung betrifft ein landwirtschaftliches Anhängefahrzeug gemäß des Oberbegriffes des Patentanspruches 1.

Derartige Anhängefahrzeuge mit einer einen Bremskraftregler aufweisender Bremskraftanlage sind beispielsweise durch die DE 101 39 757 A1, DE 30 31 105 A1 oder DE 102 15 033 A1 bekannt. Derartige Anhängefahrzeuge weisen eine Federung zwischen den Radachsen und dem Rahmen bzw. dem Vorratsbehälter des Anhängefahrzeuges auf. Je nach Beladung des Vorratsbehälters federt die Federung des Fahrzeuges ein, so dass sich eine Relativbewegung zwischen den Radachsen und dem Rahmen des Fahrzeuges bzw. dem Vorratsbehälter ergibt. Dieser Einfederungsweg wird dazu genutzt, um den Bremskraftregler entsprechend des tatsächlichen Materialvolumens in dem Vorratsbehälter mittels geeigneter Einstellmittel zu verstellen.

Bei Anhängefahrzeugen, die keine Federung und keine Wiegeeinrichtung aufweisen, über welche direkt oder indirekt das Materialvolumen des Fahrzeuges erfassbar ist, können die Bremskraftregler nur von Hand eingestellt werden. Das Einstellen von Hand ist unbefriedigend, weil der Fahrer des das landwirtschaftliche Anhängefahrzeug ziehenden Zugfahrzeug teilweise vergisst, den Bremskraftregler auf das sich tatsächlich im Vorratsbehälter jeweils befindliche Materialvolumen richtig einzustellen. Somit ist also die Bremswirkung nicht immer richtig an den Beladezustand des Anhängefahrzeuges angepasst.

Der Erfindung liegt die Aufgabe zugrunde, in einfacher Weise für Material, insbesondere Flüssigkeit transportierende landwirtschaftliche Anhängefahrzeuge, die mit keiner Federung und keiner Wiegeeinrichtung ausgestattet sind, eine einfache Einstellung des Bremskraftreglers in automatischer Weise zu ermöglichen.

Diese Aufgabe wird erfindungsgemäß dadurch gelöst, dass der Bremskraftregler mit dem Sensor zur Erfassung der tatsächlichen Materialsvolumens und/oder Materialfüllstandes in dem Vorratsbehälter verbunden und in Abhängigkeit des tatsächlichen Materialvolumens und/oder Materialfüllstandes einstellbar ist.

Infolge dieser Maßnahmen ist es auch bei landwirtschaftlichen Anhängefahrzeugen, die mit keiner Federung und keiner Wiegeeinrichtung ausgestattet sind, möglich, dass der Bremskraftregler immer richtig in Abhängigkeit des tatsächlichen Materialvolumens, welches sich in dem Vorratsbehälter befindet, eingestellt ist.

In einfacher Weise lässt sich ein Bremskraftregler bei den vorbeschriebenen landwirtschaftlichen Anhängefahrzeugen dadurch einstellen, dass der Bremskraftregler mittels einer elektronischen Regeleinrichtung, die die vom Sensor zur Erfassung des tatsächlichen Materialvolumens und/oder Materialfüllstandes in dem Vorratsbehälter erfassten und übermittelten Signale verarbeitet, einstellbar ist.

Hierbei ist es beispielsweise bei einem landwirtschaftlichen Anhängefahrzeug, welches Flüssigkeiten transportiert, wie beispielsweise Feldspritzen, möglich, dass das Füllstandssignal, welches beispielsweise von einem Schwimmer erzeugt wird, zu nutzen, um den Bremskraftregler in Abhängigkeit des Flüssigkeitsvolumens einzustellen, so dass die Bremskraft an den tatsächlichen Flüssigkeitsmenge, die sich im Vorratsbehälter befindet, angepasst werden kann.

Um in einfacher Weise über eine elektronische Regeleinrichtung den Bremskraftregler in Abhängigkeit des tatsächlichen Materialvolumens im Vorratsbehälter in optimaler Weise in seiner Wirkung anpassen zu können, ist vorgesehen, dass in dem Speicher der elektronischen Regeleinrichtung verschiedene Füllkurven des Behälters und Verstellwege des motorischen Steuerantriebes des Bremskraftreglers hinterlegbar sind.

Insbesondere bei Anhängefahrzeugen, die Flüssigkeit auf unebenen Fahrstrecken transportieren, ist es sinnvoll, um eine gleichmäßige und ruhige Bremswirkung zu erzielen, dass Mittel zur Dämpfung des von dem Sensor zur Erfassung des tatsächlichen Materialvolumens und/oder Materialfüllstandes in dem Vorratsbehälter erfassten Volumensignals vorgesehen sind.

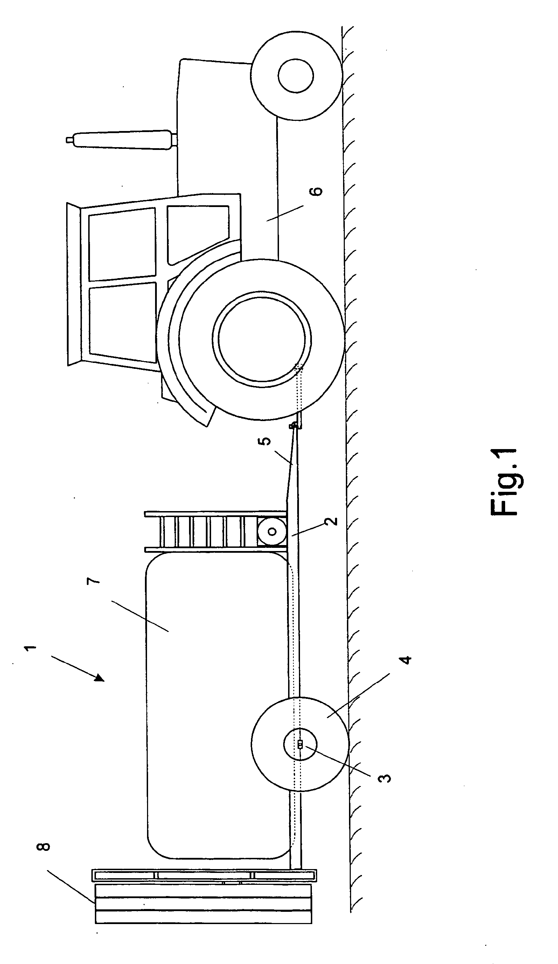

Weitere Einzelheiten der Erfindung sind den übrigen Unteransprüchen, der Beispielsbeschreibung und den Zeichnungen zu entnehmen. Hierbei zeigen
- Fig. 1: die hinter einem Ackerschlepper angeordnete Feldspritze in Prinzipdarstellung und
- Fig. 2: eine Prinzipskizze für die Bremskraftregelung einer Bremse einer Feldspritze in Abhängigkeit des Füllstandes im Vorratsbehälter.

Das als Feldspritze 1 ausgebildete landwirtschaftliche Anhängefahrzeug weist einen Rahmen 2 auf. Der Rahmen 2 ist mittels Halterungselementen an der Achse 3 der Laufräder 4 befestigt, über welche sich der Rahmen 2 auf dem Boden abstützt. Der Rahmen 2 weist auf seiner Vorderseite eine Deichsel 5 mit Anhängevorrichtung auf, die an die Anhängekupplung eines die Feldspritze 1 ziehenden Ackerschleppers 6 angeordnet ist. Auf dem Rahmen 2 der Feldspritze 1 ist ein Vorratsbehälter 7 zur Aufnahme des zu verteilenden Materiales, in diesem Falle Flüssigkeit, die mit landwirtschaftlichen Wirkstoffen, wie Herbiziden, Insektiziden oder sonstigen Pflanzenschutzmitteln oder Düngemitteln versetzt ist, angeordnet. Dieses sich im Vorratsbehälter 7 befindliche Material wird über nicht dargestellte Dosiervorrichtungen der auf der Rückseite der Feldspritze 1 angeordneten Verteileinrichtung 8 in einstellbaren Mengen zugeführt.

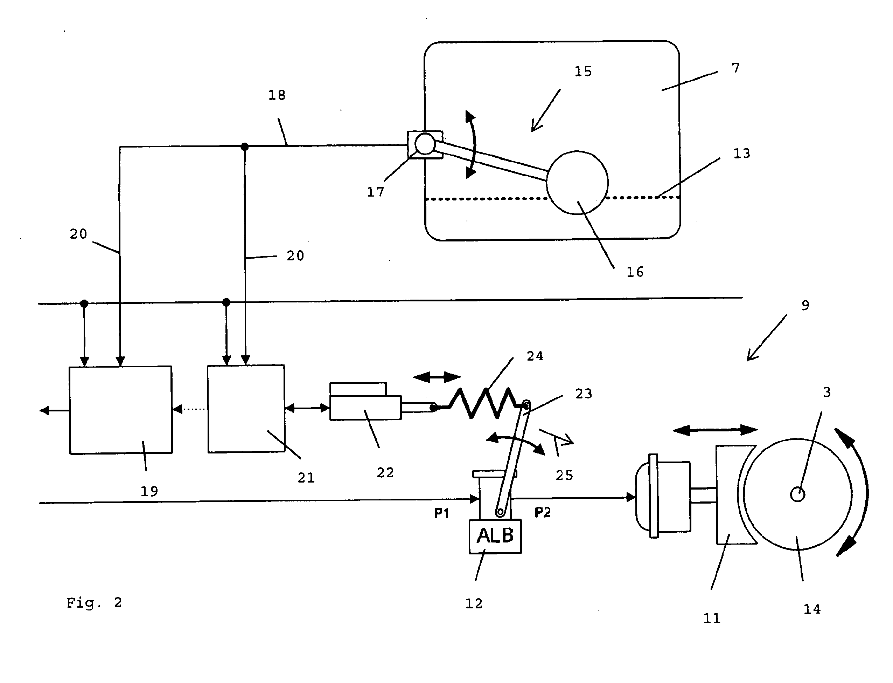

Den Laufrädern 4 der Feldspritze 1 ist eine Bremskraftanlage 8, wie in Fig. 2 dargestellt, zugeordnet, um die Feldspritze 1 ausgebildete Anhängegeräte abbremsen zu können.

Die Bremskraftanlage 9 ist über eine Bremskraftleitung 10 mit der Bremsanlage des Ackerschleppers 6 mittels geeigneter Verbindungsmittel verbunden. Über die Schlepperbremsanlage wird die Bremseinrichtung 11 der Bremsanlage 8 für die Laufräder 4 des Anhängefahrzeugs 1 betätigt.

In der von der Bremsanlage des Schleppers zu der Bremseinrichtung 11 der Bremskraftanlage 9 des Anhängefahrtzeugs 1 verlaufenden Leitung 10 ist der einstellbare Bremskraftregler 12, der als automatische lastabhängige Bremskraftregelung, kurz ALB, bezeichnet wird, angeordnet. Dieses ALB 12 weist ein einstellbares Ventil auf, mittels welchem die Bremskraft, die auf die Bremseinrichtung 11 der Laufräder 4 des Anhängefahrzeugs 1 einwirken kann, einzustellen ist.

Diese Einstellung erfolgt in Abhängigkeit des Materialvolumens und/oder des Materialfüllstandes 13 in dem Vorratsbehälter 7, so dass der Bremskraftregler 12 in Abhängigkeit des tatsächlichen Materialvolumens und/oder des Materialfüllstandes 13 einstellbar ist.

Um die automatische Einstellung der Bremskraft bzw. Bremswirkung der Laufräder 4, die mit den Bremselementen 14 verbunden sind, des Anhängefahrzeugs in Abhängigkeit des Materialvolumens bzw. des Materialfüllstands im Vorratsbehälter 7 automatisch über das Ventil des ALB's 12 anpassen zu können, ist dem Vorratsbehälter 7 ein Sensor 15 zur Erfassung des tatsächlichen Materialvolumens bzw. des Materialfüllstandes 13 in dem Vorratsbehälter 7 angeordnet. Dieser Sensor 15 ist in der Lage auch bei Anhängefahrzeugen 1, die keine Federung oder Wiegeelement zwischen dem Vorratsbehälter 7 und den Laufrädern 4 aufweisen, das Materialvolumen bzw. den Materialfüllstand 13, trotzdem erfassen zu können.

Dieser Sensor 15 ist im Ausführungsbeispiel bei der Feldspritze 1, in deren Vorratsbehälter 7 sich Flüssigkeiten befinden, als Füllstandssensor, im Ausführungsbeispiel als Schwimmer 16 ausgebildet, der ein als Potentiometer 17 ausgebildetes Sensorelement betätigt. Das Sensorelement 17 ist über Übertragungsleitungen 18, die drahtlos oder als Drahtleitung ausgebildet sein können, mit dem Bordrechner 19 des Schleppers 6 oder des Anhängefahrzeugs 1 verbunden. Das als Potentiometer 17 ausgebildete Sensorelement übermittelt in Abhängigkeit des Materialfüllstandes 13 im Vorratsbehälter 7 Signale 20 an den Bordrechner19 und/oder das dem ALB 12 zugeordnete Steuergerät 21. Hierbei können Bordrechner 19 und Steuergerät 21 als in einem Gerätelement zusammengefasst sein.

Der Bordrechner 19 bzw. das Steuergerät 21 ist als elektronische Regeleinrichtung ausgebildet. Somit erfasst diese Regeleinrichtung 21 über das Potentiometer 17 das tatsächliche Materialvolumen oder den Materialfüllstand 13 in dem Vorratsbehälter 7. Die als Bordrechner 19 bzw. Steuergerät 21 ausgebildete elektronische Regeleinrichtung verarbeitet die von dem Potentiometer 17 übermittelten Signale 20 und steuert das dem ALB 12 zugeordnete motorische Stellelement 22 an. Dieses Stellelement 22 ist als elektrischer Stellmotor ausgebildet und verstellt das Ventil des ALB 12 entsprechend.

In dem Speicher der elektronischen Regeleinrichtung sind verschiedene Füllkurven des Behälters 7 und Verstellwege des motorischen Stellelementes 22, der als elektrischer Stellmotor ausgebildet ist, zur Einstellung des Ventils des Bremskraftreglers 12 hinterlegt.

Des Weiteren können Mittel zur Dämpfung des vom Sensor 17 zur Erfassung des tatsächlichen Materialvolumens oder Materialfüllstands 13 in dem Vorratsbehälter 7 erfassten Volumensignal im Bordrechner 19 vorgesehen sein, um somit Schwallbewegungen der Flüssigkeit ausgleichen und dämpfen zu können.

Um eine Beschädigung des Ventils des Bremskraftreglers 12 zu vermeiden, ist zwischen dem Stellmotor 22 und dem Hebel 23 des Ventils des Bremskraftreglers 12 eine Überlastsicherung in Form einer Feder 24 eingebaut. Hierbei ist die Federkraft dieser Überlastsicherung 24 so ausgelegt, dass sie größer ist als die erforderliche Kraft, um den Hebel 23 des Ventils des Bremskraftreglers 12 zu verstellen. Diese Feder 24 ist eine reine Überlastsicherung.

Es ist auch möglich, an dem Hebel 23 oder zwischen dem Hebel 23 oder dem Ventil 12 eine Feder vorzusehen, die den Einstellhebel entgegensetzt zu der Richtung des Motors 22 in Pfeilrichtung 25 zieht.

## Patentansprüche

1. Landwirtschaftliches Anhängefahrzeug mit einer einen Bremskraftregler aufweisenden Bremskraftanlage, einem Vorratsbehälter zur Aufnahme der auszubringenden Materials und einem Sensor zur Erfassung des tatsächlichen Materialvolumens in dem Vorratsbehälter, wobei der Bremskraftregler in Abhängigkeit der sich im Vorratsbehälter befindlichen Materialmenge einstellbar ist, **dadurch gekennzeichnet, dass** der Bremskraftregler (12) mit dem Sensor (15,17) zur Erfassung der tatsächlichen Materialsvolumens und/oder Materialfüllstandes (13) in dem Vorratsbehälter (7) verbunden und in Abhängigkeit der tatsächlichen Materialvolumens und/oder Materialfüllstandes (13) einstellbar ist.

2. Anhängefahrzeug nach Anspruch 1, **dadurch gekennzeichnet, dass** der Bremskraftregler (12) mittels einer elektronischen Regeleinrichtung (19,21), die die vom Sensor (17) zur Erfassung des tatsächlichen Materialvolumens und/oder Materialfüllstandes (13) in dem Vorratsbehälter (7) erfassten und übermittelten Signale (20) verarbeitet, einstellbar ist.

3. Anhängefahrzeug nach einem oder mehreren der vorstehenden Ansprüche, **dadurch gekennzeichnet, dass** in dem Speicher der elektronischen Regeleinrichtung (19,21) verschiedene Füllkurven des Behälters (7) und Verstellwege des motorischen Steuerantriebes (22) des Bremskraftreglers (12) hinterlegbar sind.

4. Anhängefahrzeug nach einem oder mehreren der vorstehenden Ansprüche, **dadurch gekennzeichnet, dass** Mittel zur Dämpfung des von dem Sensor (17) zur Erfassung des tatsächlichen Materialvolumens und/oder Materialfüllstandes (13) in dem Vorratsbehälter (7) erfassten Volumensignal (21) vorgesehen sind.

## Claims

1. Agricultural trailer vehicle having a braking force system that has a braking force regulator, having a storage container for accommodating the material to be dispensed, and having a sensor for sensing the actual material volume in the storage container, wherein the braking force regulator can be set in a manner depending on the amount of material located in the storage container, **characterized in that** the braking force regulator (12) is connected to the sensor (15, 17) for sensing the actual material volume and/or material level (13) in the storage container (7) and can be set in a manner depending on the actual material volume and/or material level (13).

2. Trailer vehicle according to Claim 1, **characterized in that** the braking force regulator (12) can be set by means of an electronic regulating device (19, 21) which processes the signals (20) sensed and transmitted by the sensor (17) for sensing the actual material volume and/or material level (13) in the storage container (7).

3. Trailer vehicle according to one or both of the preceding claims, **characterized in that** various filling curves of the container (7) and adjustment paths of the motorized control drive (22) of the braking force regulator (12) can be stored in the memory of the electronic regulating device (19, 21).

4. Trailer vehicle according to one or more of the preceding claims, **characterized in that** means for damping the volume signal (21) sensed by the sensor (17) for sensing the actual material volume and/or material level (13) in the storage container (7) are provided.

## Revendications

1. Remorque agricole comportant une installation de frein avec un régulateur de force de frein, un réservoir recevant les produits à distribuer et un capteur pour détecter le volume effectif de produits dans le réservoir,
* le régulateur de force de frein étant réglé en fonction de la quantité
de produits contenus dans le réservoir,
remorque **caractérisée en ce que**
- le régulateur de force de frein (12) est relié au capteur (15, 17) pour saisir le volume effectif de produits et/ou le niveau de remplissage en produits (13) du réservoir (7), et
- il est réglable en fonction du volume effectif et/ou du niveau de remplissage de produits (13).

2. Remorque selon la revendication 1,
**caractérisée en ce que**
le régulateur de force de frein (12) est réglé par l'installation de régulation électronique (19, 21) traitant le volume de produits effectivement saisi par le capteur (17) ou le niveau de remplissage du produit (13) dans le réservoir (7) et les signaux (20) ainsi transmis.

3. Remorque selon une ou plusieurs des revendications précédentes,
**caractérisée en ce que**
la mémoire de l'installation de régulation électronique (19, 21) contient différentes courbes de remplissage du réservoir (7) et des courbes de réglage de l'actionneur motorisé (22) du régulateur de force de frein (12).

4. Remorque selon une ou plusieurs revendications précédentes,
**caractérisée par**
des moyens pour amortir le signal de volume (21) saisi par le capteur (17) pour saisir le volume effectif de produits et/ou le niveau effectif de remplissage de produits (13) du réservoir (7).
